Europäisches Patentamt

European Patent Office

Office européen des brevets

(19)

(11) Publication number: **0 222 965**
A1

# EUROPEAN PATENT APPLICATION

(21) Application number: 85830289.6

(22) Date of filing: 21.11.85

(51) Int. Cl.4: **A23L 1/182** , A23L 3/00 ,
A23L 3/18

(43) Date of publication of application:
27.05.87 Bulletin 87/22

(84) Designated Contracting States:
AT BE CH DE FR GB LI NL SE

(71) Applicant: **Viazzo, Carlo**
**Via Prarolo, 18**
**I-13100 Vercelli(IT)**
**Applicant: Viazzo, Costantino**
**Via Prarolo, 18**
**I-13100 Vercelli(IT)**
**0**

(72) Inventor: **Viazzo, Carlo**
**Via Prarolo, 18**
**I-13100 Vercelli(IT)**
Inventor: **Viazzo, Costantino**
**Via Prarolo, 18**
**I-13100 Vercelli(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) Method and apparatus for pre-cooking rice and other cereals.

(57) There are disclosed an improved method and apparatus for parboiling rice and other cereals, that is for pre-cooking them.

According to this method there is provided to preliminarly introduce the rice (or other cereals) into a vaporizing chamber, operating at a normal pressure.

Then, the rice is supplied to an autoclave, provided with horizontally extending conveyor belts, thereinto there is introduced pressurized steam, by means of suitable atomizing devices.

On the bottom of the autoclave there is arranged a coil, supplied with a given temperature fluid, automatic venting valves being further provided for venting condensate materials and monitoring windows, provided with athermal glasses, being provided on the walls of the autoclave.

## IMPROVED METHOD AND APPARATUS FOR PRE-COOKING ("PARBOILING PROCESSING") RICE AND OTHER CEREALS

### BACKGROUND OF THE INVENTION

The present invention relates to an improved method and apparatus for pre-cooking(parboiling processing) rice and other cereals.

As it is known,due to the improved organolectic characteristics of the food products obtained by natural fermentation processes(such as beer,milk products,cheese and the like),processes effective to improve the chemical-physic properties have been carried out on rice,at least on a reduced scale.

These processes which provide,essentially, a moistening step of the rice,with subsequent drying and recovering treatments,tend to increase the food or nutritive values,by means of a partial molecular decomposition,as obtained or derived from the natural fermentation.

Infact,the natural fermentaion is such as to cause the more complex organic compsitions to be separated in simpler and more digestible compunds, as well as compounds which are richer in vitamines.

Also known is the fact that efforts have been made to reproduce on an industrial scale the above mentioned processes,by means of several methods, all of which based on the use of steam in order to obtain,from the practical and economical standpoint, the desired treatment of rice (or other cereals), by carrying out,if required,additional integrating moistening steps in order to improve said processes.

On the other hand,the known processes,while offering technically acceptable results,do not consider possible chemical and/or biologic transformations susceptible to occur in the product being processed.

In actual practice the above mentioned transformations may occur both due to the impossibility or instantaneously affecting the processing time,and because of product structure alterations, caused by steam,as the pressure of the latter is associated with the weigh of the product itself.

Accordingly,the presently available apparatus and methods may cause alterations more or less marked in the obtained products,negatively affecting the value thereof.

Infact the presently available apparatus for making pre-cooked (parboiled) rice consist of large-size vessels,or the tight type,therein the product is filled and subjected to a treatment by pressurized steam.

From the mentioned vessels the treated rice is withdrawn by gravity thereby the pressure,at the output mouths,assumes very high values,due to the addition of the proper steam pressure and the weight of the product.

That fact,obviously,causes chemical alterations in the structure of the cereal material being processed,as well as evident deformations of the carioxide, since the high pressures negatively affect the outer portions of the grains.

Those same high pressures,moreover,may cause the vaporisation of substances such as furanes and pentahexanes which are present in the grains.

It should furthermore be pointed out that the above mentioned conventional systems are not able of preventing the processing waste from altering the final product.

Infact the mentioned vessels cannot be completely emptied,after each production cycle,with a deleterious consequence on the products being processed during the subsequent cycles.

Accordingly,the task of the present invention is to overcome the above mentioned drawbacks,by providing such a method and apparatus affroding the possibility of subjecting rice (or other cereals) to a perfectly homogenous pre-cooking treatment.

Within the above task,a main object of the present invention is to provide such an apparatus, for preparing pre-cooked rice(parboiled rice) effective to provide the operator with the possibility of constantly monitoring the parboiling process.

Another object of the present invention is to provide such an apparatus for making pre-cooked rice which is effective to prevent the cereal grains from being deformed or differently colored.

According to one aspect of the present invention,the above task and objects,as well as yet other objects which will become more apparent thereinafter,are achieved by a method and apparatus,characterized in that there is provided to preliminalrly introduce the rice (or other cereal) into a vaporizing chamber,operating at a normal pressure,and then supply it to an autoclave,provided with horizontal conveyor belts therein there is introduced pressurized steam by means of suitable atomizing devices, on the bottom of said autoclave there being arranged a coil,supplied with a given temperature fluid, automatic valves being further provided,for venting the condensate materials,monitoring windows provided with athermal glasses being provided on the walls of said autoclave.

Further characteristics and advantages of the improved method and apparatus for pre-cooking rice according to the present invention,will become more apparent from the following detailed description of a preferred embodiment thereof,being illustrated, by way of an indicative example,in the figures of the accompanying drawings,where:

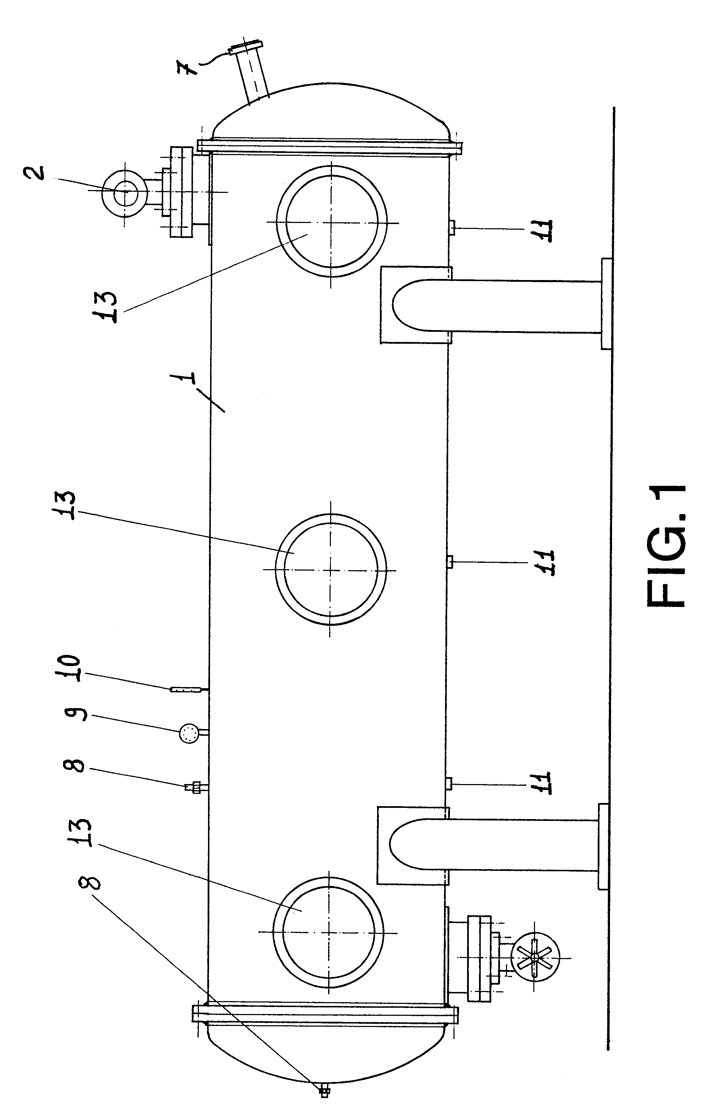

fig.1 is an elevation view illustrating the apparatus according to the present invention;

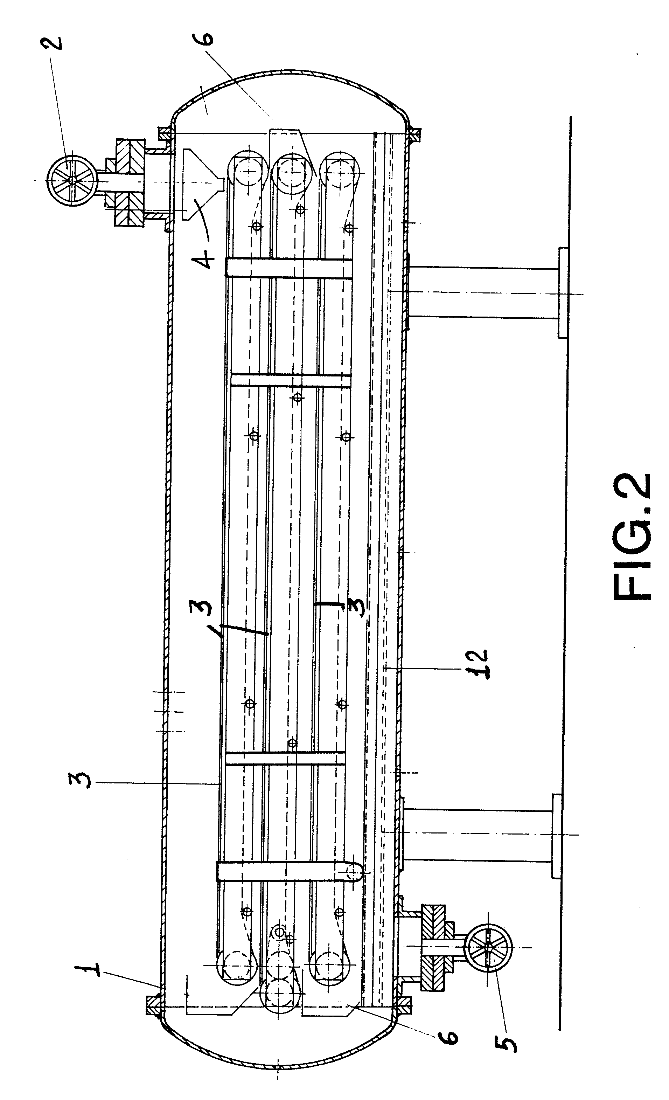

fig.2 is a longitudinal cross-section view illustrating that same apparatus.

With reference to the number references of the figures of the accompanying drawings,the method according to the present invention,provides for that the rice,or other cereal,as preliminarly introduced into a vaporizing chamber,operating at atmpospheric pressure,(not specifically shown),be then introduced into an autoclave 1,preferably by means of an air drive or transportation means,through a suitable inlet valve 2.

In the inside of the autoclave there are arranged, on superimposed horizontal planes,a plurality of conveyor belts 3,thereon the rice,as it falls from the hopper 4,is caused to subsequently pass as far as to discharge through an outlet mouth with wheel 5.

More specifically,the passage of the rice,from one to the other of said belts and from the latter thereof to the outlet mouth,is facilitated by the provision of suitable baffles 6 arranged at the end portions of said belts.

The drive for operating said baffles and other gears arranged inside the autoclave is arranged,as it should be apparent,in the inside of said autoclave.

Moreover,the motion transmission is carried out by means of shafts and/or countershafts and/or mechanical joints,of the tight type,effective to assure a great stability to the unit.

At one end of the autoclave,there is provided a duct 7 for introducing pressurized steam,whereas, at the opposite end and at the top,there are provided safety valves 8.

At the top of that same autoclave,moreover,there are aranged a pressure gauge 9 and a thermometer 10 and,on the bottom,there are arranged automatic valves11,coupled to an inner level indicating element and effective to assure the venting of the condensate.

It should be further pointed out that,on the bottom of said autoclave,there is further arranged a coil 12 supplied with a hot fluid and effective to hold the temperature at the bottom constant.

On the walls of the autoclave,in particular,there are formed small windows 13,provided with athermal glasses.

More specifically,contrarily to which occurs in the presently used apparatus and methods,the rice is transported in a static suspension,in a comparatively small amounts,with a small thickness,for a better exposure to the treatment and exclusively to the steam.

In particular said steam operates as a catalyzer,for a perfect transformation of the product and the related biologic setting of the nutritive and vitaminic substances,while preventing the above mentioned factors from negatively affecting the product itself.

Thus the deleterious effects of substances which are present in the raw rice,such as furfural - (which is contained in the outer shell or envelope) are prevented,while having a perfectly homogeneous treatment of the product.

Infact the thereinabove disclosed apparatus receives,processes and ejects each individual grain in the same manner,without creating deposits or waste which,as aforesaid,since they are subjected to the treatment for a longer time,originate darker grains negatively affecting the aspect of the ultimate product.

In other words one may consider that the rice, carried on the conveyor belts of the autoclave,is caused to flow through the steam saturated space,along all of the preset path,as far as the output of said autoclave.

Moreover,by the apparatus according to the present invention,the operator may change and correct,or define,each element contributing to the success of the treatment,by acting on suitable changers/timers effective to control the operation of the mechanisms in the inside of the autoclave and then verify,or monitor,through the mentioned windows or slots,as suitably illuminated,the effects of the taken decisions or of the carried out operations.

Each individual parameter:moisture,temperature,pressure,exposure time to the steam and related temperature,and so on,may accordingly be preliminarily set and,if required,modified without altering the quality of the obtained product,and optimizing it, by possibly using copper elements.

It should be moreover pointed out that the method according to the present invention is such as to assure a less presence of typical defects of the parboiled rice,which defects may be contemporaneously or separatedly treated,both by additional copper elements (as antifungine material,for example for the networks of the conveyor belts or the vessel walls)-and by solutions based on the same material,in order to prevent on of the most serious defect of the processed rice from occurring,that is the formation of black grains which are deemed to be caused by spores in symbiosis with the grains.

Likewise,for those same objects,it will be possible to use infrared radiations susceptible to further improve the obtained product.

In particular,the comparatively small amount of product exposed to steam,contrarily to the presently available production techniques,prevent the grains from excessively deforming,which grains are in a jelly condition because of the processing, and provide them with a smaller moisture content at the outlet of the autoclave.

That fact affords the possibility,by using a subsequent air transportation system,of completely eliminating concentrated and consolidated product agglomerates thereby facilitating the drying step,which is indispensible for sending the processed rice to the other necessary processing steps.

The obtained product,while preserving all of the typical and desirable characteristics of the parboiled rice,has the desired color(or determined by a suitable selection of the temperature,pressure and moisture content)and,generally,clearer and brighter than the usual yellow of the precooked rice, with a reduction of the odor which is characteristic of the presently commercially available products.

These latter characteristics,in addition to being a warranty of a optimal cooking consistency, indicates the perfect success of the carried out treatment and a complete chemical transformation,with a consequent molecular decomposition,which renders the product not only a more nutrient one,but also a more digestible one,with respect to conventional rice, while preserving the quality,odor,color aspects.

From the above disclosure and the figures of the accompanying drawings,the great functionality and use facility characterizing the method and apparatus for making precooked or parboiled rice according to the present invention will be self-evident.

Obviously it should be apparent that the subject apparatus has been thereinabove disclosed and illustrated only by way of an indicative but not limitative example,and only to demonstrate the manner for carrying out the invention and its main characteristics,and accordingly the invention will be susceptible to many modifications and variations all of which come within the scope of the invention.

## Claims

1-A method and apparatus for precooking-(parboiling) rice and other cereals,characterized in that there is provided to preliminarly introduce the rice (or other cereal) into a vaporizing chamber,operating at a normal pressure,and then supply it to an autoclave,provided with horizontal conveyor belts, therein there is introduced pressurized steam by means of suitable atomizing devices,on the bottom of said autoclave there being arranged a coil,supplied with a given temperature fluid,automatic valves being further provided,for venting the condensate materials,monitoring windows provided with athermal glasses being provided on the walls of said autoclave.

2-A method,according to the preceding claims, characterized in that the cereal,preliminarly introduced into said vaporizing chamber,is then transferred into said autoclave by means of air transportation means,through an inlet valve.

3-An apparatus according to claim1,characterize in that in the inside of said autoclave there are arranged,on superimposed horizontal planes,conveyor belts thereon the rice,as it falls from a hopper, is caused to successively pass,as far as to discharge through an outlet mouth,provided with a control wheel,the passage of the rice,or other cereal from one to the other of said belts and from the latter of said belts to the outlet mouth being facilitated by the provision of baffle members as arranged at the end portions of said conveyor belts.

4-An apparatus according to claim1,characterized in that the drive for operating said conveyor belts and other gears,arranged inside said autoclave,is located outside of said autoclave and in that the motion transmission is carried out by means of shafts and/or countershafts and/or joints or mechanichal tight type.

5-An apparatus,according to claim 1,charaterized in that,at one end of said autoclave,there is arranged a duct for introducing pressurized steam into said autoclave,whereas,at the opposite end of said autoclave and on the top thereof,there are provided safety valves,on the top of said autoclave there being moreover provided a pressure gauge and a thermometer,and on the bottom thereof,there being provided automatic valves coulped to an inner level indicating means and effective to vent the condensate materials.

6-An apparatus according to claim 1,characterized in that,on the bottom of said autoclave,there is arranged a coil,supplied with a hot fluid,small windows as protected by athermal glasses being formed on the walls of said autoclave.

7-A method according to claim 1,characterized in that in said method the rice or cereal is transported in a static suspension,in comparatively small amounts and with a small thickness,for a better exposure to the treatment and exclusively to the action of the steam.

8-An apparatus according to claim 1,characterized in that said conveyor belts and/or the walls of said autoclave are made of copper or other suitable materials.

9-An apparatus according to claim 1,characterized in that it is provided,at the outlet of said autoclave, with an air transportation system,for conveying the processed cereal to further drying apparatus.

10-An apparatus and method according to the preceding claims and substantially as broadly disclosed and illustrated in the preceding disclosure and in the figures of the accompanying drawings.

FIG. 1

FIG.2

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 779 576 (R.P.C. CARCASSONNE-LE DUC) * claim 1, figure 1, page 2, right-hand column * | 1 | A 23 L 1/182<br>A 23 L 3/00<br>A 23 L 3/18 |
| Y | DE-A-1 910 744 (D.F. FARKAS) * figure 1, page 6, paragraph 5 - page 7, paragraph 2 * | 1 | |
| Y | FR-A- 368 272 (P. DUBAR) * figure 1 * | 1 | |
| A | DE-C- 900 054 (F.H. ROGERS) * claim 1 * | 1 | |
| A | WO-A-8 300 802 (A/S APOTHEKERNES LABORATORIUM FOR SPECIALPRÄPARATER) * figure 1, page 12, paragraph 4 - page 13, paragraph 1, pages 17-18 * | 1 | TECHNICAL FIELDS SEARCHED (Int. Cl.4)<br><br>A 23 L 1/00<br>A 23 L 3/00 |

The present search report has been drawn up for all claims

| Place of search | Date of completion of the search | Examiner |
|---|---|---|
| BERLIN | 04-07-1986 | SCHULTZE D |